# EUROPÄISCHE PATENTANMELDUNG

(11) **EP 0 603 494 A2**
(43) Veröffentlichungstag der Anmeldung: **29.06.1994**
(21) Anmeldenummer: 93117207.6
(22) Anmeldetag: 23.10.1993
(51) Int. Cl.: G01L 5/16

(54) **Kraftmesseinrichtung**

(30) Priorität: 19.12.1992 DE 4243246
(71) Anmelder: WABCO Standard GmbH, D-53121 Bonn (DE)
(72) Erfinder: Frank, Dieter, D-30171 Hannover (DE); Stender, Axel, D-31787 Hameln (DE)
(74) Vertreter: Schrödter, Manfred, Dipl.-Ing.

(57) **Zusammenfassung**

2.1 Bekannte Kraftmeßeinrichtungen für zwei in verschiedenen Wirkrichtungen angreifende Kräfte sind so angeordnet, daß die Meßrichtungen ihrer Kraftsensoren mit den Wirkrichtungen der Kräfte übereinstimmen bzw. parallel dazu verlaufen. Eine solche Anordnung stößt mitunter auf Schwierigkeiten, beispielsweise räumlicher Art.

2.2 Zur Vermeidung solcher Schwierigkeiten schlägt die Erfindung vor, wenigstens einen der Kraftsensoren (2 bzw. 3) so anzuordnen, daß seine Meßrichtung (δ bzw. γ) von den Wirkrichtungen (α, β) beider Kräfte (F₁, F₂) abweicht.

2.3 Ein spezielles Anwendungsgebiet der Erfindung ist die Fahrzeugtechnik, in der häufig an gewichtskraftbelasteten Bauteilen außerdem eine Vortriebs-, Fahrwiderstands-, Trägheits-, Bremskraft auftreten.

## Beschreibung

Die Erfindung betrifft eine Kraftmeßeinrichtung nach dem Oberbegriff des Patentanspruchs 1.

Eine solche Kraftmeßeinrichtung ist auf Seite 9 der EP 0 303 821 B1 erwähnt. Deren Kraftsensoren messen eine Kraft in vertikaler Richtung und eine Kraft in horizontaler Richtung. Der Körper, an dem diese Kräfte angreifen, ist die Sattelkupplung einer Straßenzugmaschine.

Es ist üblich, eine solche Kraftmeßeinrichtung so anzuordnen, daß die Meßrichtungen ihrer Kraftsensoren mit den Wirkrichtungen der Kräfte übereinstimmen bzw. parallel dazu verlaufen. Es gibt aber Einsatzfälle, in denen eine solche Anordnung der Kraftmeßeinrichtung auf Schwierigkeiten, beispielsweise räumlicher Art, stößt.

Der Erfindung liegt deshalb die Aufgabe zugrunde, eine Kraftmeßeinrichtung der eingangs genanten Art mit einfachen Mitteln so zu verbessern, daß sie eine problemlose Anordnung ermöglicht.

Diese Aufgabe wird durch die in dem Patentanspruch 1 angegebene Erfindung gelöst. Vorteilhafte Ausgestaltungen sind in den Unteransprüchen angegeben.

Die Erfindung läßt sich besonders vorteilhaft in solchen Fällen einsetzen, in denen, wie allgemein üblich, die Meßgenauigkeit der verwendeten Kraftsensoren im unteren Teil von deren Arbeitsbereich gering ist und in denen die Größe einer der Kräfte in weiten Grenzen schwankt, wobei die Untergrenze durchaus Null sein kann. In einem solchen Fall liefert die bekannte Kraftmeßeinrichtung, wenn die zuletzt genannte Kraft klein ist, ungenaue Meßergebnisse. Durch die erfindungsgemäße Anordnung der Kraftmeßeinrichtung schafft hingegen die andere, in ihrer Größe gleichbleibende oder weniger schwankende Kraft, für beide Kraftsensoren eine Grundlast, welche ausschließt, daß einer der Kraftsensoren in seinem Bereich geringer Meßgenauigkeit arbeitet.

Die Erfindung läßt sich auch einsetzen, wenn eine der Kräfte fehlt. In diesem Fall mißt die Erfindung die verbleibende Kraft durch Messung ihrer Komponenten in den Meßrichtungen der Kraftsensoren.

Häufig werden Kraftsensoren eingesetzt, die nur in einer Richtung messen können. In solchen Fällen sind im Stand der Technik zwei sich gegenüberstehende Kraftsensoren erforderlich, wenn die Kraft bzw. die Kräfte bezüglich eines Kraftsensors zwischen Zug und Druck wechseln. In einem solchen Fall ermöglicht die Erfindung wegen der vorgesehenen Differenz zwischen Meßrichtungen und Wirkrichtung bzw. Wirkrichtungen der Kraft bzw. der Kräfte, die dem Zug bzw. dem Druck zugeordneten Kraftsensoren wegzulassen. Die Erfindung bietet damit eine einfache und kostengünstige Lösung.

Häufig arbeiten die eingesetzten Kraftsensoren nach dem Prinzip der Dehnungs- bzw. Verformungsmessung. In einem solchen Fall ermöglicht die Erfindung die Auswertung der Meßergebnisse der Kraftsensoren als Dehnungs- bzw. Verformungswerte, wie sie in den Meßrichtungen auftreten.

Die Erfindung wird nunmehr unter Angabe weiterer Vorteile anhand eines schematisch zeichnerisch dargestellten Ausführungsbeispiels erläutert.

An einem Körper (1) greifen mit durch auf eine Bezugslinie V-V bezogenen Wunkeln α und β bezeichneten Wirkrichtungen zwei Kräfte F₁ und F₂ an. Jede der Kräfte F₁ und F₂ kann eine Resultierende aus mehreren Kräften sein.

Zur Messung der Kräfte F₁ und F₂ ist eine Kraftmeßeinrichtung (2, 3) mit zwei schematisch dargestellten Kraftsensoren (2 und 3) vorgesehen. Jeder Kraftsensor (2 bzw. 3) kann ein Einzelsensor sein, kann aber auch aus mehreren Einzelsensoren bestehen. Die Kraftsensoren (2 und 3) sind so angeordnet, daß ihre durch auf die BezugslinieV-V bezogene Winkel γ und δ bezeichneten Meßrichtungen von den Wirkrichtungen α und β der Kräfte F₁ und F₂ abweichen. Die von dem Kraftsensor (2) gemessene Kraft in Meßrichtung δ ist als F_{Mess2}, die von dem Kraftsensor (3) gemessene Kraft in Meßrichtung γ ist als F_{Mess1} eingetragen
Es läßt sich nachweisen, daß

${\text{F₁= F}}_{\text{Mess1}} {\text{·sin(β-γ)+F}}_{\text{Mess2}} \text{·sin(β+δ) /sin(α+β) (I)}$

${\text{F₂= F}}_{\text{Mess1}} {\text{·sin(α+γ)+F}}_{\text{Mess2}} \text{·sin(α-δ) /sind(α+β) (II)}$

gilt.

Wirken die Kräfte F₁ und F₂ zueinander senkrecht, so daß $\text{α + β = 90°}$ ist, so vereinfachen sich die Beziehungen (I) und (II) zu

${\text{F₁=F}}_{\text{Mess1}} {\text{·cos(γ+α)+F}}_{\text{Mess2}} \text{·cos(δ-α) (III)}$

${\text{F₂=F}}_{\text{Mess1}} {\text{·sin(α+γ)+F}}_{\text{Mess2}} \text{·sin(α-δ) (IV)}$

Wirken die Kräfte F₁ und F₂ zueinander senkrecht, ist also $\text{α + β = 90°}$ , und fällt außerdem die Wirkrichtung der Kraft F₁ mit der Bezugslinie V-V zusammen, ist also außerdem α =0, so vereinfachen sich die Beziehungen (III) und (IV) zu

${\text{F₁=F}}_{\text{Mess1}} {\text{·cosγ+F}}_{\text{Mess2}} \text{·cosδ (v)}$

${\text{F₂=F}}_{\text{Mess1}} {\text{·sinγ-F}}_{\text{Mess2}} \text{·sinδ (VI).}$

In diesem Fall hat sich als besonders vorteilhaft die Festlegung der Meßrichtungen γ und δ auf jeweils 45 ° herausgestellt.

Entsprechende Beziehungen gelten, wenn bei senkrecht zueinander wirkenden Kräften F₁ und F₂ die Wirkrichtung der Kraft F₂ mit der Bezugslinie V-V zusammenfällt, also β = 0.

Fallen die Meßrichtung des Kraftsensors (3) und die Wirkrichtung der Kraft F₂ zusammen oder verlaufen sie zueinander parallel, so gilt

${\text{F₁=F}}_{\text{Mess2}} \text{·sin(β+δ)/sin(α+β) (VII)}$

${\text{F₂=F}}_{\text{Mess1}} {\text{+F}}_{\text{Mess2}} \text{·sin(α-δ)/sin(α+β) (VIII).}$

Entsprechende Beziehungen gelten, wenn die Meßrichtung des Kraftsensors (2) und die Wirkrichtung der Kraft F₁ zusammenfallen oder zueinander parallel verlaufen, wenn also $\text{δ = α}$ .

Anhand der Beziehungen (I) bis (VIII) bzw. der erwähnten entsprechenden Beziehungen können aus den gemessenen Kräften F_{Mess1} und F_{Mess2}, beispielsweise mittels eines elektronischen Rechners, die Größen der Kräfte F₁ und F₂ berechnet werden.

In dem Fall, daß die Kraftsensoren (2 und 3) nach dem Prinzip der Dehnungs- bzw. Verformungsmessung arbeiten, lassen sich die gemessenen Kräfte F_{Mess1} und F_{Mess2} anhand der entsprechenden Kennlinien der Kraftsensoren (2 und 3) in Dehnungs- bzw. Verformungswerte in den Meßrichtungen (γ und δ) umrechnen.

Einsatzfälle für eine solche Kraftmeßeinrichtung bieten alle technischen Gebiete, wobei häufig die Bezugslinie V-V, wie auch im Ausführungsbeispiel dargestellt, senkrecht verläuft. Als Beispiel für ein Anwendungsgebiet sei das Gebiet der Fahrzeugtechnik erwähnt, in dem häufig eine Gewichtskraft als die eine Kraft (F₁ oder F₂) und eine Vortriebs-, Fahrwiderstands-, Trägheits-, Bremskraft, aber auch eine Resultierende aus solchen Kräften, als die andere Kraft (F₂ oder F₁) zu messen sind. Dabei schwankt oft die Gewichtskraft nicht oder (relativ) wenig, während die genannten anderen Kräfte bzw. die Resultierende daraus oft in weiten Grenzen, ja sogar zwischen Null und einem Maximalwert, schwanken. Als spezielles Anwendungsgebiet aus der Fahrzeugtechnik sei noch die Messung von Bremskräften an gewichtskraftbelasteten Rädern und Fahrzeugverbindungen, wie einer Sattelkupplung, genannt.

In dem Fall, daß eine Kraft (F1 bzw. F2) fehlt, ist ihre Angriffsrichtung, d. h. der entsprechende Winkel (α bzw. β) nicht vorhanden, und die oben angegebenen Formeln vereinfachen sich entsprechend bzw. entfallen gegebenenfalls.

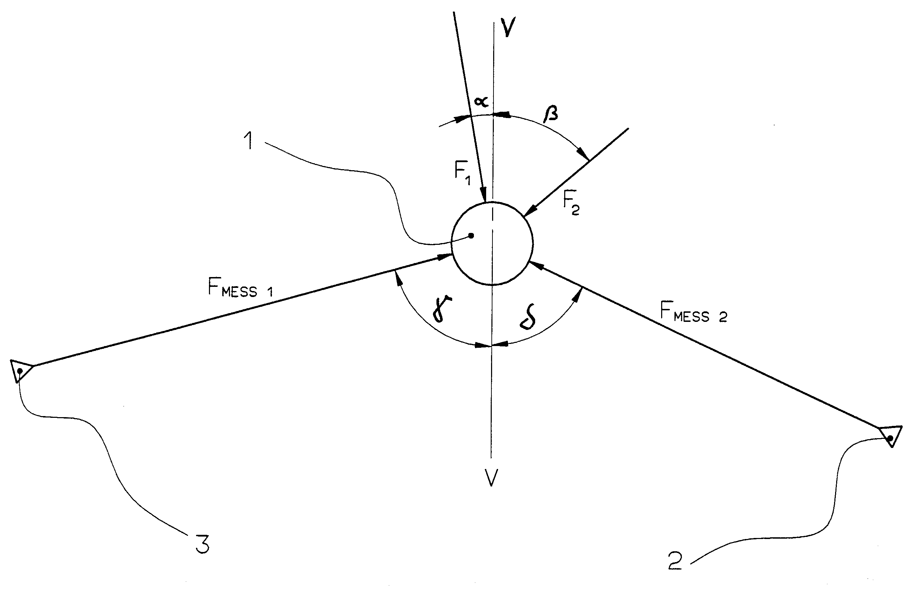

## Patentansprüche

1. Kraftmeßeinrichtung mit wenigstens zwei Kraftsensoren (2 und 3) zur Messung von zwei in verschiedenen Richtungen an einem Körper (1) angreifenden Kräften (F₁, F₂),
dadurch gekennzeichnet,
daß wenigstens einer der Kraftsensoren (2 bzw. 3) so angeordnet ist, daß seine Meßrichtung (δ bzw. γ) von den Wirkrichtungen (α, β) beider Kräfte (F₁, F₂) abweicht.

2. Kraftmeßeinrichtung nach Anspruch 1,
dadurch gekennzeichnet,
daß auch der andere Kraftsensor (3 bzw. 2) so angeordnet ist, daß seine Meßrichtung (γ bzw. δ) von den Wirkrichtungen (α, β) beider Kräfte abweicht.

3. Kraftmeßeinrichtung nach einem der vorhergehenden Ansprüche,
dadurch gekennzeichnet,
daß die eine Kraft (F₁ bzw. F₂) fehlt.
